(19) Europäisches Patentamt / European Patent Office / Office européen des brevets

(11) **EP 2 390 689 B1**

(12) **FASCICULE DE BREVET EUROPEEN**

(45) Date de publication et mention
de la délivrance du brevet:
**28.07.2021 Bulletin 2021/30**

(51) Int Cl.:
**G02B 5/20** *(2006.01)*     **G02B 5/28** *(2006.01)*

(21) Numéro de dépôt: **11305463.9**

(22) Date de dépôt: **19.04.2011**

(54) **Filtre optique propre à traiter un rayonnement d'indicence variable et détecteur comprenant un tel filtre**

Optischer Filter für Strahlen mit variablen Einfallwinkeln und Detektor mit einem solchen Filter

Optical filter suitable for treating a ray with variable incidence and detector including such a filter

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.05.2010 FR 1054059**

(43) Date de publication de la demande:
**30.11.2011 Bulletin 2011/48**

(73) Titulaire: **COMMISSARIAT À L'ÉNERGIE ATOMIQUE ET AUX ÉNERGIES ALTERNATIVES**
**75015 Paris (FR)**

(72) Inventeurs:
- **Boutami, Salim**
  **38100 Grenoble (FR)**
- **Desieres, Yohan**
  **38250 Lans en Vercors (FR)**
- **Frey, Laurent**
  **38600 Fontaine (FR)**
- **Grand, Gilles**
  **38000 Grenoble (FR)**

(74) Mandataire: **Cabinet Laurent & Charras**
**Le Contemporain**
**50 Chemin de la Bruyère**
**69574 Dardilly Cedex (FR)**

(56) Documents cités:
| | |
|---|---|
| EP-A1- 1 592 067 | EP-A1- 1 630 532 |
| EP-A2- 0 271 165 | DE-A1- 3 148 427 |
| JP-A- 57 179 807 | US-A- 6 031 653 |
| US-A1- 2004 057 116 | |

- **None**

## Description

### DOMAINE DE L'INVENTION

La présente invention concerne le domaine des filtres optiques à base de cavités de Fabry-Pérot et caractérisés par une grande surface de filtrage. Elle trouve particulièrement application dans le domaine des filtres optiques matriciels, notamment les filtres RVB destinés aux imageurs visibles.

### ETAT DE LA TECHNIQUE

Usuellement, les imageurs visibles comportent une matrice de photosites, par exemple CCD ou CMOS, sensibles dans une large gamme du rayonnement visible, et notamment sensible à la fois aux longueurs d'ondes rouges, bleues et vertes. Comme cela est connu en soi, chaque photosite est alors spécialisé dans la détection d'une des ces longueurs d'onde par la superposition d'une matrice de filtres rouges, verts et bleus distribués selon un matriçage de Bayer.

Les matrices de filtres les plus connues sont constituées de résines colorées déposées sur la matrice de photosites. Ce type de matrices de filtres à base de résines colorées est cependant sensible à l'angle d'incidence de la lumière, un angle d'incidence important entrainant une longueur de propagation plus importante dans la résine.

En outre, aves les résines colorées, il est difficile d'accéder à des tailles de pixels très petites, c'est-à-dire de taille inférieure au micromètre, d'une part parce que l'épaisseur des résines peut difficilement être réduite à cause de leur densité en pigments limitée, ce qui occasionne du cross-talk entre les pixels, et d'autre part en raison des zones de transition entre pixels adjacents qui ont des dimensions non négligeables, en raison du dépôt successif non parfaitement conforme des résines associées aux différentes couleurs (la pente des flancs n'est pas conservée au fur et à mesure des dépôts).

En outre, comme cela est connu en soi, les imageurs visibles sont usuellement pourvus d'un filtre infrarouge placé devant la matrice de photosites. En effet, les photosites de technologie CCD, et plus encore ceux de technologie CMOS, présentent une sensibilité très élevée dans l'infrarouge, ce qui nuit à la qualité de la détection dans le visible si aucune mesure n'est prise.

Or, un filtre infrarouge est sensible à l'angle d'incidence du rayonnement. Notamment, sa coupure du filtre se décale à mesure que l'angle d'incidence augmente (c'est-à-dire s'éloigne de l'incidence normale), subissant un décalage vers le bleu. Ainsi, pour les angles d'incidence importants, une partie utile du spectre visible est coupée, particulièrement dans le rouge. C'est donc l'association résine-filtre infrarouge qui est assez sensible à l'angle d'incidence.

Des matrices de filtres à base de cavités de Fabry-Pérot ont été conçues pour assurer simultanément le filtrage coloré et infrarouge. Ces matrices comprennent classiquement plusieurs couches métalliques séparées par une ou plusieurs couches diélectriques, dont l'indice de réfraction et l'épaisseur sont choisis pour régler la longueur d'onde des cavités de Fabry-Pérot. Les couches diélectriques sont classiquement constituées d'un unique matériau de sorte que leur indice de réfraction est constant sur toute la matrice. Ainsi pour obtenir des cavités de Fabry-Pérot réglées sur des longueurs d'onde différentes, mais juxtaposées les unes par rapport aux autres, par exemple selon un matriçage de Bayer, il est donc réalisé une matrice avec une ou plusieurs couches diélectriques d'épaisseur variable, l'épaisseur servant à régler la longueur d'onde des cavités. On pourra par exemple se reporter au document US 6 031 653 pour plus de détails sur ce type de matrices de cavités de Fabry-Pérot. Avec ces filtres métal/diélectrique, le filtre infrarouge n'est plus nécessaire car l'infrarouge est coupé par le métal.

Cette solution adresse le problème de l'épaisseur des filtres qui est réduite d'un facteur 2 environ, mais n'améliore pas significativement la dépendance des réponses spectrales avec l'angle d'incidence, ni le problème des zones de transition entre pixels inhérents à la non planarité des filtres.

La fabrication d'une matrice de cavités de Fabry-Pérot d'épaisseur variable est de plus assez contraignante en termes de processus industriel car cela nécessite de nombreuses étapes de masquage et de gravure qui allongent considérablement le temps de fabrication et réduisent le gain en coût final de la matrice apporté par la suppression du filtre infrarouge. En outre, une planarisation de la matrice est généralement nécessaire car sa surface est ultérieurement utilisée pour la formation de microlentilles. Une épaisseur supplémentaire est donc ajoutée à l'empilement des cavités de Fabry-Pérot, ce qui a pour effet d'augmenter le phénomène de diaphonie (ou « *cross-talk* ») qui est directement lié à l'épaisseur des matériaux traversés pour atteindre les photosites, même s'il reste en-deçà des niveaux rencontrés avec les filtres à résines.

Le document EP 1 630 532 A1 divulgue un détecteur spectralement sélectif. Le document EP 1 592 067 propose, dans le mode de réalisation illustré aux figures 13A à 13E, une matrice de cavités de Fabry-Pérot d'épaisseur constante. Plutôt que d'utiliser l'épaisseur de la ou des couches diélectriques pour régler la longueur d'onde des cavités, ce document propose d'utiliser leur indice de réfraction.

La figure 1, qui reprend la figure 13D de ce document, est une vue en coupe d'une matrice **10** de cavités Fabry-Pérot, illustrant trois cavités de Fabry-Pérot juxtaposées et formant respectivement un filtre en transmission bleu **12,** un filtre en transmission rouge **14** et un filtre en transmission vert **16.**

La matrice **10** comporte :

- un substrat isolant **20** ;

- une première alternance **22** de couches diélectriques en SiO$_2$ et TiO$_2$, déposées sur le substrat **20** et formant une surface semi réfléchissante ;
- une couche diélectrique **24** d'indice de réfraction variable
- une seconde alternance **26** de couches diélectriques en SiO$_2$ et TiO$_2$, déposées sur la couche diélectrique **24** et formant une surface semi réfléchissante.

La couche diélectrique **24** est formée de trois zones distinctes d'indice de réfraction moyen différent, à savoir une première zone **28** constituée de TiO$_2$, une deuxième zone **30** constituée de SiO$_2$, et une troisième zone **32** formée entre les première et deuxième zones **28, 30** et constituée d'un réseau périodique de bandes de TiO$_2$ réalisées dans une couche de SiO$_2$. Le TiO$_2$ représentant 1/5 du volume de la troisième zone **32,** et donc le SiO$_2$ représente 4/5 de ce volume, de sorte que l'indice de réfraction moyen de la zone 32 est égal à

$$\sqrt{\frac{1}{5} \times n_{TiO_2}^2 + \frac{4}{5} \times n_{SiO_2}^2} \; .$$

Cette structure forme ainsi trois cavités de Fabry-Pérot juxtaposées, réglées respectivement sur une longueur d'onde bleu, rouge et verte.

Toutefois, la longueur d'onde à laquelle il est obtenu une résonnance dans une cavité de Fabry-Pérot, et ainsi l'effet recherché, à savoir une bande passante étroite en transmission autour de ladite longueur d'onde, dépend non seulement de l'indice de réfraction et de l'épaisseur de la couche de diélectrique, mais également de l'angle d'incidence du rayonnement électromagnétique sur la cavité.

Or, les cas de rayonnement ayant une incidence constante sur toute la surface de la matrice de cavités de Fabry-Pérot sont très rares.

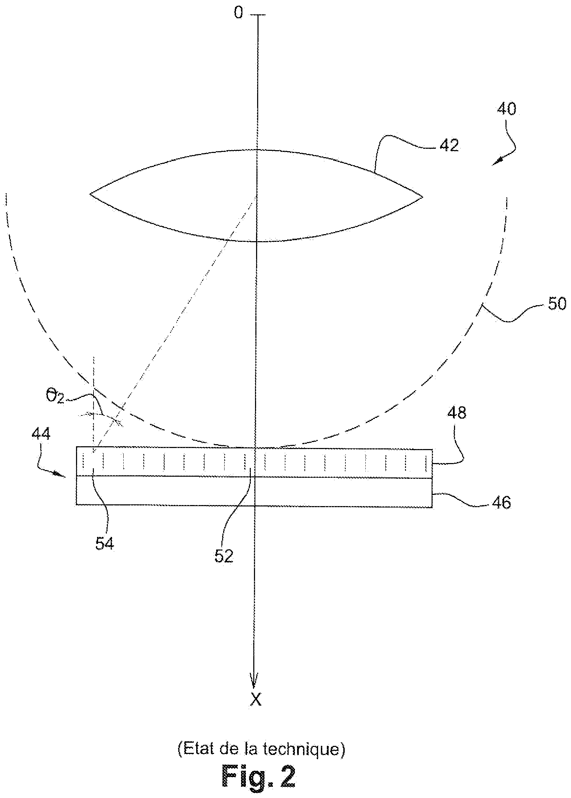

Notamment, dans le domaine de l'imagerie, la matrice de photosites sur laquelle est superposée la matrice de cavités est toujours placée dans le plan focal d'une optique pour former sur le capteur une image de la scène observée. Ce type de détecteur est illustré à la figure 2. Cette figure montre de façon schématique un détecteur **40,** comme une caméra par exemple, comportant une optique **42,** d'axe optique OX, et un capteur plan **44**. Le capteur **44** comprend un circuit de détection **46** ayant une matrice de photosites placée dans le plan focal de l'optique **42,** et une matrice **48** de cavités de Fabry-Pérot superposée au circuit de détection **46** et analogue à celle du document EP 1 592 067.

Comme cela est connu en soi, l'optique forme une image sensiblement sphérique de la scène. Un front d'onde **50** sphérique est ici montré de manière exagérée à la figure 2 pour illustrer le problème la variation de l'angle d'incidence du rayonnement incident sur la matrice **48**. Il est ainsi remarquable que ce rayonnement a une incidence normale sur la matrice **48** sur l'axe optique OX et une incidence non normale ailleurs. Ainsi par exemple, il est fréquent pour les tailles de capteurs **44** de l'état de la technique que l'angle d'incidence $\theta_L$ au bord de la matrice **48** soit égal à 20°, l'angle d'incidence étant repéré par rapport à la normale au plan de la matrice **48**.

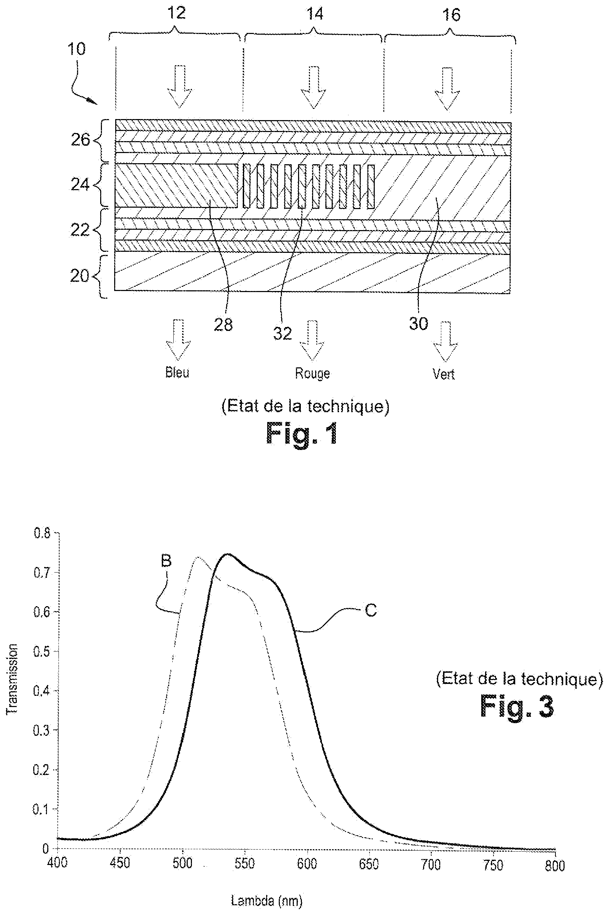

La figure 3 illustre l'influence de l'angle d'incidence sur la position dans le spectre de la bande passante de transmission d'une cavité de Fabry-Pérot. La réponse en transmission « C » est par exemple celle de la cavité **52** placée sur l'axe optique OX et la réponse en transmission « B » est par exemple celle de la cavité **54** placée au bord de la matrice **48,** les deux cavités **52** et **54** étant identiques et réglées sur une longueur d'onde verte. La cavité **52** sur l'axe optique OX reçoit un rayonnement d'incidence normal alors que la cavité au bord de la matrice **48** reçoit un rayonnement d'angle d'incidence égal à 20°.

Comme on peut le constater, il existe un décalage sensible entre ces deux réponses en transmission, la réponse « B » étant d'ailleurs proche du bleu alors que la réponse C correspond à une longueur d'onde verte. Ainsi donc, il existe une grande variabilité des longueurs d'onde sélectionnées en fonction de la position des cavités dans la matrice **48**. L'image détectée par le circuit de détection **46** n'est donc pas fidèle aux couleurs réelles de la scène observée.

## EXPOSE DE L'INVENTION

Le but de la présente invention est de résoudre le problème susmentionné en proposant un filtre comportant des cavités de Fabry-Pérot d'épaisseur constante dont la réponse en transmission est insensible à la variation d'angle d'incidence d'un rayonnement électromagnétique prédéterminée.

A cet effet, l'invention a pour objet un détecteur de rayonnement électromagnétique défini dans la revendication 1.

Selon l'invention, l'indice de réfraction moyen de la couche diélectrique ou semi-conductrice est variable dans un plan orthogonal à la direction de l'empilement de manière à compenser les effets de la variation de l'angle d'incidence du rayonnement électromagnétique sur le spectre de transmission des cavités.

En d'autres termes, à l'aide uniquement de l'indice de réfraction, il est possible de régler les cavités de Fabry-Pérot pour qu'elles aient sensiblement le même profil de transmission quelle que soit leur position dans le filtre.

Selon un mode de réalisation de l'invention, notamment adapté à un rayonnement à front d'onde sensiblement sphérique, l'indice de réfraction moyen d'une cavité recevant un rayonnement d'angle d'incidence $\theta$

satisfait sensiblement la relation $\; n = \dfrac{n_{pixel\_centre}}{\cos(\theta)} \; ,$ où

n est l'indice moyen de la cavité, et $n_{pixel\_centre}$ est l'indice moyen d'une cavité destinée à recevoir un rayonnement sous incidence normale.

Selon un mode de réalisation de l'invention, des cavités de Fabry-Pérot comportent au moins deux matériaux, les indices et les proportions des matériaux dans chacune desdites cavités étant choisis en fonction de l'angle d'incidence du rayonnement sur la cavité, afin de régler ladite cavité sur la longueur d'onde prédéterminée de réglage. Plus particulièrement, chacune desdites cavités est constituée de deux matériaux, un matériau prenant la forme de motifs périodiques formés dans l'autre matériau, le facteur de remplissage des motifs réglant l'indice de réfraction moyen de la cavité.

Notamment, les motifs ont une épaisseur inférieure ou égale à celle de la couche diélectrique ou semi-conductrice, l'épaisseur des motifs de la cavité étant choisie en fonction de l'angle d'incidence du rayonnement sur la cavité.

De manière avantageuse, chacune desdites cavités est constituée de deux matériaux, un matériau prenant la forme de motifs périodiques formés dans l'autre matériau, la période des motifs étant choisie inférieure à la longueur d'onde sur laquelle est réglée la cavité, de manière à ce que cette dernière présente un indice de réfaction sensiblement homogène pour ladite longueur d'onde. Plus particulièrement, la période des mo-

$$d = \frac{\lambda_{res} \times \cos(\theta)}{2},$$

tifs est inférieure ou égale à où $\lambda_{res}$ est la longueur d'onde sur laquelle est réglée la cavité, et $\theta$ est l'angle d'incidence du rayonnement sur la cavité.

Selon un mode de réalisation de l'invention, le filtre comporte un empilement de deux couches diélectriques ou semi-conductrices identiques séparées par une couche centrale partiellement réfléchissante et agencées entre deux couches extrêmes partiellement réfléchissantes.

Plus particulièrement, l'épaisseur de la couche centrale est supérieure à l'épaisseur de chacune des couches extrêmes.

Selon un mode de réalisation de l'invention, les couches partiellement réfléchissantes sont métalliques.

Selon un mode de réalisation de l'invention, le filtre comporte trois ensembles de cavités de Fabry-Pérot, réglés respectivement sur des longueurs d'onde rouge, verte et bleue, et agencés selon un matriçage de Bayer.

Selon l'invention, les cavités de Fabry-Pérot sont d'épaisseur identique. Les cavités de Fabry-Pérot gardent donc la même épaisseur, ce qui permet notamment de réaliser des filtres de petites tailles, et corolairement des photosites également de petite taille.

## BREVE DESCRIPTION DES FIGURES

L'invention sera mieux comprise à la lecture de la description qui va suivre, donnée uniquement à titre d'exemple, et réalisée en relation avec les dessins annexés, dans lesquels des références identiques désignent des éléments identiques ou analogues, et dans lesquels :

- la figure 1 est une vue schématique en coupe d'une matrice de cavités de Fabry-Pérot selon l'état de la technique ;
- la figure 2 est une vue schématique en coupe d'un détecteur comportant la matrice de cavités de la figure 1 ;
- la figure 3 est un tracé de réponses de transmission respectivement d'une cavité de Fabry-Pérot positionnée sur l'axe optique du détecteur de la figure 2 et d'une cavité de Fabry-Pérot positionnée au bord de la matrice ;
- la figure 4 est une vue schématique en coupe d'une matrice de cavités de Fabry-Pérot selon l'invention ;
- la figure 5 est une vue schématique en coupe d'une variante de matrices de cavités de Fabry-Pérot selon l'invention ; et
- la figure 6 est un tracé de réponses de transmission d'une cavité de Fabry-Pérot positionnée sur l'axe optique du détecteur et d'une cavité de Fabry-Pérot positionnée au bord de la matrice avec et sans compensation de l'angle d'incidence du rayonnement incident sur cette cavité.

## DESCRIPTION DETAILLEE DE L'INVENTION

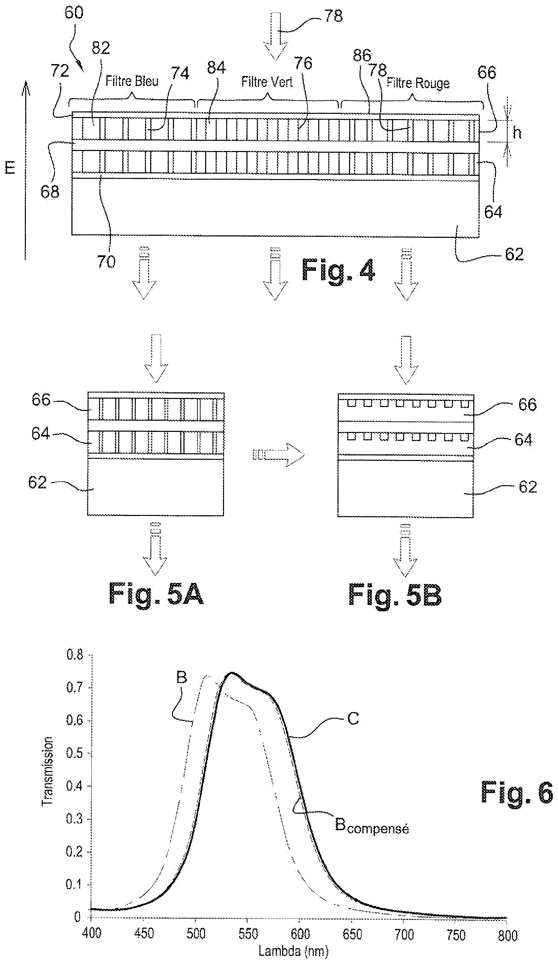

La figure 4 est une vue schématique en coupe d'une matrice **60** de cavités de Fabry-Pérot, pour l'exemple au nombre de trois, formant des filtres rouge, vert et bleu. La matrice **60** est par exemple agencée dans un détecteur analogue à celui de la figure 2.

La matrice **60** comporte un substrat isolant **62** sur lequel est déposé un empilement de deux couches diélectriques ou semi-conductrices **64, 66** identiques, séparées par une couche métallique centrale **68** et disposées entre deux couches métalliques extrêmes **70** et **72**. Les différentes couches sont planes et empilées selon une direction E.

L'indice de réfraction des couches **64** et **66** est variable dans un plan perpendiculaire à la direction E de l'empilement afin de définir des zones de filtrages différentes. Plus particulièrement, les couches **64** et **66** sont divisées en zones **74, 76, 78** d'indice de réfraction moyen différent. Chaque zone des couches **64** et **66** est constituée de deux matériaux diélectriques ou deux matériaux semi-conducteurs formant des motifs périodiques **82, 84, 86,** tels que des bandes parallèles à section rectangulaire formées dans l'épaisseur des couches **64** et **66**. Les proportions respectives de ces matériaux règlent l'indice de réfraction moyen de la zone.

Chaque zone **74, 76, 78,** combinée avec les couches métalliques **68, 70, 72,** forme ainsi une cavité de Fabry-Pérot, dont la longueur d'onde de résonnance est fonction de l'épaisseur de la cavité, de l'indice de réfraction de la zone et de l'angle d'incidence du rayonnement sur la cavité. Dans la suite, on parlera indifféremment de l'indice de réfraction d'une zone ou de l'indice de réfraction de la cavité de Fabry-Pérot correspondante.

Bien que représentés côte à côte dans l'exemple de la figure 3, on comprendra que les filtres rouges, verts et bleus formés par les cavités de Fabry-Pérot, peuvent être distribués de manière différente en fonction de l'application visée, comme par exemple selon un matriçage de Bayer.

Chaque cavité de Fabry-Pérot ainsi formée définit un résonateur électromagnétique pour une longueur d'onde $\lambda_{res}$ selon les relations :

$$\lambda_{res} = \frac{2 \times h \times n \times \cos\theta}{m - \frac{\varphi_1 + \varphi_2}{2}} \qquad (1)$$

$$n = \sqrt{f \times n_b^2 + (1-f) \times n_h^2} \qquad (2)$$

où :

- n est l'indice de réfraction moyen de la cavité,
- h est l'épaisseur de la cavité, c'est-à-dire l'épaisseur des couches **64**, **66** ;
- $\theta$ est l'angle d'incidence moyen du rayonnement sur la cavité,
- m est un entier positif définissant l'ordre de la cavité,
- $\varphi_1$ et $\varphi_2$ sont des déphasages de réflexion sur les couches métalliques **68** et **72,** ou de manière équivalente sur les couches **68** et **70** ;
- f est la proportion du premier matériau, par exemple celui de plus bas indice de réfraction ; le nombre f, également désigné sous l'expression « facteur de remplissage », est compris entre 0 et 1 ;
- et $n_b$ et $n_h$ sont respectivement les indices de réfraction du premier et du second matériaux.

Pour chaque longueur d'onde rouge $\lambda_{res}^{rouge}$, bleue $\lambda_{res}^{bleu}$ et verte $\lambda_{res}^{vert}$ visée, l'indice de réfraction n des cavités de Fabry-Pérot correspondantes est choisi de manière à satisfaire, quel que soit l'emplacement des cavité dans la matrice **60,** la relation :

$$n \times \cos\theta = n_{pixel\_centre} \qquad (3)$$

où $n_{pixel\_centre}$ est un nombre constant égal à l'indice de réfraction d'une cavité réglée sur la longueur d'onde visée et recevant un rayonnement d'incidence normale ($\theta = 0$).

On notera que la relation (3) est générique à tout type de cavités de Fabry-Pérot, y compris celles ne comprenant qu'une seule couche diélectrique ou semiconductrice. L'indice de réfraction d'une cavité est ainsi réglé simplement en fonction de l'angle d'incidence du rayonnement au moyen du facteur de remplissage f sélectionné selon la relation :

$$f = \frac{n_h^2 \times \cos^2\theta - n_{pixel\_centre}^2}{(n_h^2 - n_b^2) \times \cos^2\theta} \qquad (4)$$

De manière avantageuse, la période des motifs périodiques des cavités de Fabry-Pérot est très inférieure aux longueurs d'onde visées afin que les cavités présentent un indice de réfraction homogène pour ces longueurs d'onde.

Plus particulièrement, la période $p_1$ des réseaux de bandes de premier matériau dans le second matériau, ou de manière analogue la période $p_2$ des réseaux de bandes de second matériau dans le premier matériau satisfait la relation :

$$p_{1,2} \leq \frac{\lambda_{res} \times \cos(\theta)}{2} \qquad (5)$$

De cette manière, les inventeurs ont constaté que les cavités de Fabry-Pérot se comportent, pour les longueurs d'ondes visées, comme des cavités d'indice homogène. Au delà de la limite définie à la relation (5), si l'angle d'incidence reste effectivement compensé, le spectre de transmission des cavités de Fabry-Pérot se dégradent (baisse de la transmission et apparition de multiples pics de transmission notamment) et ne correspond plus à un spectre de cavité à indice homogène.

Par ailleurs, quelque soit l'agencement des cavités de Fabry-Pérot, l'indice de réfraction d'une cavité de Fabry-Pérot est de préférence homogène et/ou constant pour la longueur d'onde visée pour cette cavité.

De préférence, les deux matériaux constitutifs des couches **64** et **66** sont respectivement un matériau d'indice de réfraction élevé, tel que par exemple du Si, du $HfO_2$, du SiN, du ZnS, ou du $TiO_2$, et un matériau d'indice de réfraction bas, tel que par exemple du $SiO_2$, du $Al_2O_3$, du SiOC ou des matériaux nanoporeux ou de faible densité ($SiO_2$ nanoporeux, ou SiOC nanoporeux, etc...).

De préférence, le matériau de bas indice de réfraction est choisi pour constituer entièrement les cavités ayant l'indice de réfraction le plus faible (f = 1), c'est-à-dire les cavités réglées sur la longueur d'onde bleue et recevant un rayonnement d'incidence normale. De même, le matériau d'indice de réfraction élevé est choisi pour constituer entièrement les cavités ayant l'indice de réfraction le plus élevé (f = 0), c'est-à-dire les cavités réglées sur la longueur d'onde rouge et recevant un rayonnement d'incidence maximale. Ceci permet de considérer les deux cas de cavités extrêmes en termes d'indices effectifs requis, et ainsi de s'assurer que ces indices effectifs extrêmes sont compris dans la gamme délimitée par le matériau de plus faible indice, et celui de plus fort indice.

Les couches métalliques **68, 70, 72** sont par exemple réalisées en Ag, Al, Au ou Cu. Les couches métalliques sont avantageuses dans le domaine visible car elles présentent une faible transmission dans les infrarouges.

La couche métallique centrale **68** a par ailleurs une épaisseur supérieure à celle de chacune des couches extrêmes **70, 72,** et de préférence deux fois supérieure à l'épaisseur de chacune des couches **70, 72,** ce qui permet d'avoir une réponse en transmission comportant un unique pic.

Lorsque le facteur de remplissage f est très petit (ou très grand), les bandes de premier matériau dans le second matériau (respectivement les bandes de second matériau dans le premier matériau) ont une largeur très faible, ce qui peut rendre leur fabrication délicate compte tenu des techniques de lithographie et gravure classiques.

Afin de simplifier la fabrication des réseaux périodiques, les motifs constitutifs de ceux-ci ne sont pas gravés dans toute l'épaisseur des couches **64** et **66,** mais partiellement dans ces couches, comme cela est visible aux figures 5A et 5B.

La figure 5A illustre une cavité de Fabry-Pérot telle que décrite précédemment avec des bandes réalisées dans toute l'épaisseur des couches **64** et **66** et dont la surface totale représente 15% de la surface de la cavité.

La figure 5B illustre une cavité avec des bandes réalisées partiellement dans l'épaisseur des couches **64** et **66,** c'est-à-dire ici sur la moitié de l'épaisseur de ces couches, mais présentant un facteur de remplissage f identique à celui de la cavité de la figure 5A. Dans la figure 5B, la surface totale des bandes représente 50% de la surface de la cavité. Comme on peut le constater les bandes de la figure 5B sont plus larges et donc plus simple à réaliser, la longueur d'onde de la cavité restant par ailleurs inchangée.

A titre d'exemple, les couches métalliques **68, 70, 72** sont en Au et ont respectivement une épaisseur de 40 nm, 60 nm et 40 nm, les couches **64** et **66** ont une épaisseur de 80 nm sont réalisées en $TiO_2$ et en $SiO_2$, avec une proportion de $SiO_2$ variant de 0% (en effet, la proportion minimale de est fixée par le pixel rouge recevant une incidence maximale, pour lequel l'indice effectif doit être plus fort que pour une incidence normale(15%)) à 85% (f = 0,85, fixé par le filtre bleu en incidence normale). En incidence normale, les cavités de Fabry-Pérot ont une proportion de 15% en $SiO_2$ (f=0,15) pour la longueur d'onde rouge, de 50% (f = 0,5) pour la longueur d'onde verte, et de 85% pour la longueur d'onde bleue (f = 0,85).

La figure 6 illustre l'effet de la prise en compte de l'angle d'incidence dans le choix des indices de réfraction des cavités de Fabry-Pérot, pour la longueur d'onde verte :

- la courbe « C » est la réponse en transmission d'une cavité ayant une proportion de $SiO_2$ égale à 50% et sous rayonnement d'incidence normale ;
- la courbe « B » est la réponse de cette même cavité sous un rayonnement d'incidence égale à 20°,
- et la courbe « $B_{compensé}$ » est la réponse en transmission d'une cavité ayant une proportion de $SiO_2$ égale à 35% soumise à un rayonnement d'incidence égale à 20°.

Comme on peut le constater, la réponse « $B_{compensé}$ » est identique à la réponse « C », montrant ainsi une compensation efficace de l'angle d'incidence non normal.

En pratique, pour concevoir une matrice de cavités de Fabry-Pérot selon l'invention, le rayonnement électromagnétique est tout d'abord déterminé afin de connaître ses angles d'incidence sur un plan correspondant à la matrice de cavités. Par exemple, dans le cas d'un détecteur visible, la forme du rayonnement issu d'une optique est parfaitement connue. On se reportera par exemple au document « Optical efficiency of image sensor pixels », Peter B. Catrysse and Brian A. Wandell, , J. Opt. Soc. Am. A/Vol. 19, No. 8/August 2002, pp 1610.

Il a été décrit des cavités de Fabry-Pérot structurées par un réseau périodique de bandes parallèles. De telles cavités ont une amplitude maximale de transmission élevée mais sont sensibles à la polarisation du rayonnement incident.

En variante, ces cavités sont structurées par deux réseaux périodiques de bandes parallèles, ces deux réseaux étant orthogonaux. Ceci permet d'insensibiliser les cavités à la polarisation du rayonnement mais diminue l'amplitude maximale des réponses en transmission des cavités.

De même, il a été décrit des cavités de Fabry-Pérot d'épaisseur identique. Il est également possible de choisir des épaisseurs différentes pour les cavités de Fabry-Pérot, dont les valeurs sont choisies, en combinaison avec les valeurs d'indice, pour compenser l'angle d'incidence variable du rayonnement, en s'appuyant par exemple sur les relations (1) et (2) pour le choix des épaisseurs et des indices.

De même, il a été décrit une application au domaine de l'imagerie visible. On comprendra que la présente invention s'applique également à d'autres domaines spectraux.

## Revendications

**1.** Détecteur de rayonnement électromagnétique comportant :

- une optique formant une image sensiblement sphérique ;
  - un circuit de détection plan comportant une matrice d'éléments photosensibles et disposé en sortie de l'optique selon un plan orthogonal à l'axe optique de celle-ci; et
  - un filtre optique (60) matriciel plan disposé entre le circuit de détection et l'optique et s'étendant parallèlement au circuit de détection, ledit filtre optique (60) comprenant un empilement d'au moins une couche diélectrique ou semi-conductrice (64, 66) agencée entre deux couches partiellement réfléchissantes (68, 70, 72), ledit empilement définissant au moins un ensemble de cavités de Fabry-Pérot d'épaisseur identique et réglées sur une longueur d'onde commune prédéterminée, chacune des cavités de Fabry-Pérot étant agencée au-dessus de chaque élément photosensible,

chaque cavité étant constituée de deux matériaux avec un matériau prenant la forme de motifs périodiques formés dans l'autre matériau,
l'indice de réfraction moyen des cavités étant décroissant le long de rayons définis depuis le point du filtre optique (60) par lequel passe l'axe optique par ajustement des proportions respectives des deux matériaux de manière à compenser les effets de la variation de l'angle d'incidence sur le spectre de transmission desdites cavités.

2. Détecteur de rayonnement électromagnétique selon la revendication 1, *caractérisé* **en ce que** l'indice de réfraction moyen d'une cavité recevant un rayonnement d'angle d'incidence θ satisfait sensiblement la relation $n = \dfrac{n_{\text{pixel\_centre}}}{\cos(\theta)}$, où n est l'indice moyen de la cavité, et $n_{\text{pixel centre}}$ est l'indice moyen d'une cavité recevant un rayonnement sous incidence normale.

3. Détecteur de rayonnement électromagnétique selon la revendication 2, *caractérisé* **en ce que**, pour une longueur d'onde prédéterminée, l'indice de réfraction de chaque cavité est réglé en fonction de l'angle d'incidence du rayonnement au moyen du facteur de remplissage f sélectionné selon la relation :

$$f = \frac{n_h^2 \times \cos^2\theta - n_{\text{pixel\_centre}}^2}{\left(n_h^2 - n_b^2\right) \times \cos^2\theta}$$

où $n_b$ et $n_h$ sont respectivement les indices de réfraction des deux matériaux.

4. Détecteur de rayonnement électromagnétique selon la revendication 3, *caractérisé* **en ce que** les motifs (82, 84, 86) ont une épaisseur inférieure ou égale à celle de la couche diélectrique ou semi-conductrice, l'épaisseur des motifs de la cavité étant choisie en fonction de l'angle d'incidence du rayonnement sur la cavité

5. Détecteur de rayonnement électromagnétique selon la revendication 3 ou 4, *caractérisé* la période des motifs est choisie inférieure à la longueur d'onde sur laquelle est réglée la cavité de manière à ce que cette dernière présente un indice de réfaction sensiblement homogène pour ladite longueur d'onde.

6. Détecteur de rayonnement électromagnétique selon la revendication 5, *caractérisé* **en ce que** la période des motifs est inférieure ou égale à

$$d = \frac{\lambda_{\text{res}} \times \cos(\theta)}{2},$$

où $\lambda_{\text{res}}$ est la longueur d'onde sur laquelle est réglée la cavité, et θ est l'angle d'incidence du rayonnement sur la cavité.

7. Détecteur de rayonnement électromagnétique selon l'une quelconque des revendications précédentes, *caractérisé* **en ce qu'**il comporte un empilement de deux couches diélectriques ou semi-conductrices (64, 66) identiques séparées par une couche centrale (68) partiellement réfléchissante et agencées entre deux couches extrêmes (70, 72) partiellement réfléchissantes.

8. Détecteur de rayonnement électromagnétique selon la revendication 7, *caractérisé* **en ce que** l'épaisseur de la couche centrale (68) est supérieure à l'épaisseur de chacune des couches extrêmes (70, 72).

9. Détecteur de rayonnement électromagnétique selon l'une quelconque des revendications précédentes, *caractérisé* **en ce que** les couches (68, 70, 72) partiellement réfléchissantes sont métalliques.

10. Détecteur de rayonnement électromagnétique selon l'une quelconque des revendications précédentes, *caractérisé* **en ce qu'**il comporte trois ensembles de cavités de Fabry-Pérot, réglés respectivement sur des longueurs d'onde rouge, verte et bleue, et agencés selon un matriçage de Bayer.

**Patentansprüche**

1. Elektromagnetischer Strahlungsdetektor, bestehend aus:

einer Optik, die ein im Wesentlichen sphärisches Bild erzeugt;

• einem flachen Detektionskreislauf, der eine Anordnung lichtempfindlicher Elemente umfasst und am Ausgang der Optik in einer Ebene orthogonal zu deren optischer Achse angeordnet ist; und

• einem flachen optischen Matrixfilter (60), der zwischen dem Detektionskreislauf und der Optik angeordnet ist und sich parallel zum Detektionskreislauf erstreckt, wobei der optische Filter (60) einen Stapel aus mindestens einer dielektrischen oder Halbleiterschicht (64, 66) umfasst, die zwischen zwei teilreflektierenden Schichten (68, 70, 72) angeordnet ist, wobei der Stapel mindestens einen Satz von Fabry-Perot-Hohlräumen mit identischer Dicke definiert und auf eine gemeinsame vorbestimmte Wellenlänge abgestimmt ist, wobei jeder der Fabry-Perot-Hohlräume über jedem lichtempfindlichen Element angeordnet ist,

und wobei jeder Hohlraum aus zwei Materialien besteht, wobei ein Material die Form von periodischen Mustern annimmt, die in dem anderen Material gebildet werden,

wobei der durchschnittliche Brechungsindex der Hohlräume entlang von Strahlen abnimmt, die vom optischen Filter (60) ausgehen, durch den die optische Achse verläuft, indem die jeweiligen Anteile der beiden Materialien so eingestellt werden,

dass die Auswirkungen der Variation des Einfallswinkels auf das Durchlässigkeitsspektrum der Hohlräume kompensiert werden.

2. Elektromagnetischer Strahlungsdetektor gemäß Anspruch 1, **dadurch gekennzeichnet, dass** der gemittelte Brechungsindex eines Hohlraums, der Strahlung mit dem Einfallswinkel $\theta$ empfängt, im Wesentlichen die Relation $n = \dfrac{n_{pixel\_cente}}{\cos(\theta)}$, erfüllt, wobei n der gemittelte Index des Hohlraums ist und $n_{pixel\ cente}$ der gemittelte Index eines Hohlraums ist, der Strahlung unter normalem Einfall empfängt.

3. Elektromagnetischer Strahlungsdetektor gemäß Anspruch 2, **dadurch gekennzeichnet, dass** für eine vorgegebene Wellenlänge der Brechungsindex jedes Hohlraums in Abhängigkeit vom Einfallswinkel der Strahlung mittels des Füllfaktors f gemäß der nachfolgenden Relation eingestellt wird:

$$ f = \frac{n_h^2 \times \cos^2\theta - n_{pixel\_cente}^2}{\left(n_h^2 - n_b^2\right) \times \cos^2\theta} $$

wobei $n_b$ und $n_h$ jeweils die Brechungsindizes der beiden Materialien sind.

4. Elektromagnetischer Strahlungsdetektor gemäß Anspruch 3, **dadurch gekennzeichnet, dass** die Muster (82, 84, 86) eine Dicke aufweisen, die kleiner oder gleich derjenigen der dielektrischen oder halbleitenden Schicht ist, wobei die Dicke der Muster des Hohlraums in Abhängigkeit vom Einfallswinkel der Strahlung auf den Hohlraum gewählt wird.

5. Elektromagnetischer Strahlungsdetektor gemäß Anspruch 3 oder 4, **dadurch gekennzeichnet, dass** die Periode der Muster so gewählt ist, dass sie kleiner ist als die Wellenlänge, auf die der Hohlraum abgestimmt ist, so dass letzterer einen im Wesentlichen homogenen Brechungsindex für die genannte Wellenlänge aufweist.

6. Elektromagnetischer Strahlungsdetektor gemäß Anspruch 5, **dadurch gekennzeichnet, dass** die Periode der Muster kleiner als oder gleich

$$ d = \frac{\lambda_{res} \times \cos(\theta)}{2}, $$

ist, wobei $\lambda_{res}$ die Wellenlänge ist, auf die der Hohlraum abgestimmt ist, und $\theta$ der Einfallswinkel der Strahlung auf den Hohlraum ist.

7. Elektromagnetischer Strahlungsdetektor nach einem der vorhergehenden Ansprüche, **dadurch gekennzeichnet, dass** er einen Stapel aus zwei identischen dielektrischen oder halbleitenden Schichten (64, 66) umfasst, die durch eine teilreflektierende Mittelschicht (68) getrennt und zwischen zwei teilreflektierenden Endschichten (70, 72) angeordnet sind.

8. Elektromagnetischer Strahlungsdetektor gemäß Anspruch 7, **dadurch gekennzeichnet, dass** die Dicke der mittleren Schicht (68) größer ist als die Dicke jeder der Endschichten (70, 72).

9. Elektromagnetischer Strahlungsdetektor nach einem der vorhergehenden Ansprüche, **dadurch gekennzeichnet, dass** die teilreflektierenden Schichten (68, 70, 72) metallisch sind.

10. Elektromagnetischer Strahlungsdetektor nach einem der vorhergehenden Ansprüche, **dadurch gekennzeichnet, dass** er drei Sätze von Fabry-Perot-Hohlräumen umfasst, die jeweils auf rote, grüne und blaue Wellenlängen abgestimmt sind und gemäß einer Bayer-Matrix angeordnet sind.

## Claims

1. An electromagnetic radiation detector comprising:

   ▪ an optic forming a substantially spherical image;
   ▪ a plane detector circuit comprising an array of photosensitive elements and placed at the output of the optic according to a plane orthogonal to the optical axis thereof; and
   ▪ an plane matrix optical filter (60) placed between the detector circuit and the optic and extending parallel to the detector circuit,

   said optical filter (60) including a stack of at least one dielectric or semi-conductor layer (64, 66) arranged between two partially reflective layers (68, 70, 72), said stack defining at least a set of Fabry-Perot cavities of identical thickness set to a predetermined common wavelength, each of the Fabry-Perot cavities being arranged above each photosensitive element, each of said cavities being composed of two materials, one material taking the form of periodic patterns formed in the other material, the average refractive index of the cavities decreasing along rays defined from the point of the filter (60) through which the optical axis passes by adjusting the respective proportions of both materials in order to compensate the effects of the variation in the angle of incidence on the transmission spectrum of said cavities.

2. The electromagnetic radiation detector as claimed in claim 1, *wherein* the average refractive index of a cavity receiving a radiation of angle of incidence θ substantially satisfies the relation $n = \dfrac{n_{pixel\_centre}}{\cos(\theta)}$,
   where n is the average index of the cavity, and $n_{pixel\_centre}$ is the average index of a cavity receiving a radiation under normal incidence.

3. The electromagnetic radiation detector as claimed in claim 2, *wherein* for a predetermined wavelength, the refractive index of each cavity is set as a function of the angle of incidence of the radiation by means of the fill factor f selected according to the relation:

$$f = \frac{n_h^2 \times \cos^2\theta - n_{pixel\_centre}^2}{\left(n_h^2 - n_b^2\right) \times \cos^2\theta}$$

   where $n_b$ and $n_h$ are the refractive indices of the two materials respectively

4. The electromagnetic radiation detector as claimed in claim 3, *wherein* the patterns (82, 84, 86) have a thickness smaller than or equal to that of the dielectric or semi-conductor layer, the thickness of the patterns of the cavity being selected as a function of the angle of incidence of the radiation on the cavity.

5. The electromagnetic radiation detector as claimed in claim 3 or 4, *wherein* the period of the patterns is selected to be smaller than the wavelength to which the cavity is set in such a way that the latter has a substantially homogenous refractive index for said wavelength.

6. The electromagnetic radiation detector as claimed in claim 5, *wherein* the period of the patterns is smaller than or equal to $d = \dfrac{\lambda_{res} \times \cos(\theta)}{2}$, where $\lambda_{res}$ is the wavelength to which the cavity is set, and θ is the angle of incidence of the radiation on the cavity.

7. The electromagnetic radiation detector as claimed in any one of the previous claims, *wherein* it comprises a stack of two identical dielectric or semi-conductor layers (64, 66) separated by a partially reflective central layer (68) and arranged between two partially reflective end layers (70, 72).

8. The electromagnetic radiation detector as claimed in claim 7, *wherein* the thickness of the central layer (68) is greater than the thickness of each of the end layers (70, 72).

9. The electromagnetic radiation detector as claimed in any one of the previous claims, *wherein* the partially reflective layers (68, 70, 72) are metal.

10. The electromagnetic radiation detector as claimed in any one of the previous claims, *wherein* it comprises three sets of Fabry-Perot cavities, set to red, green and blue wavelengths respectively, and arranged in a Bayer array.

(Etat de la technique)

# Fig. 1

(Etat de la technique)

# Fig. 3

0

42

40

50

$\theta_2$

44

48

46

54

52

X

(Etat de la technique)

# Fig. 2

Fig. 4

Fig. 5A

Fig. 5B

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6031653 A
- EP 1630532 A1
- EP 1592067 A

**Littérature non-brevet citée dans la description**

- **PETER B. CATRYSSE ; BRIAN A. WANDELL.** Optical efficiency of image sensor pixels. *J. Opt. Soc. Am. A,* Août 2002, vol. 19 (8), 1610